# EUROPÄISCHE PATENTSCHRIFT

(11) **EP 2 697 609 B1**
(45) Veröffentlichungstag und Bekanntmachung des Hinweises auf die Patenterteilung: **11.01.2017**
(21) Anmeldenummer: 11805892.4
(22) Anmeldetag: 30.12.2011
(51) Int. Cl.: G01D 5/24

(54) **KAPAZITIVER WEGGEBER**
CAPACITIVE POSITION TRANSDUCER
DISPOSITIF CAPACITIVE DE MESURE DE POSITION

(30) Priorität: 13.04.2011 DE 102011002009
(43) Veröffentlichungstag der Anmeldung: 19.02.2014
(73) Patentinhaber: ELRAD International d.o.o., 9250 Gornja Radgona (SI)
(72) Erfinder: SÄMANN, Rudolf, 72336 Balingen (DE)
(74) Vertreter: Herrmann, Jochen
(86) Internationale Anmeldenummer: PCT/EP2011/074329
(87) Internationale Veröffentlichungsnummer: WO 2012/139672

(56) Entgegenhaltungen:
- DE-A1- 2 816 600
- GB-A- 2 035 569
- US-A- 5 585 733

## Beschreibung

Die Erfindung betrifft einen kapazitiven Weggeber mit einem Gehäuse.

Derartige Weggeber werden beispielsweise bei Elektrowerkzeugen, insbesondere bei Bohrmaschinen, Akkuschraubern, elektrischen Handkreissägen sowie anderen elektrischen Handwerkzeugen eingesetzt. Bei derartigen Elektrowerkzeugen wird beispielsweise mittels eines mehr oder weniger weit eindrückbaren Betätigungsknopfes die Drehzahl des elektrischen Antriebsmotors verändert. Je nach Eindrücktiefe des Betätigungsknopfes wird dabei eine zugeordnete Drehzahl eingeregelt. Mittels einer mechanischen Übersetzung wird die Bewegung des Betätigungsknopfes an den Weggeber übertragen, der mit einer Schaltung verbunden ist, die eine wegproportionale Änderung der Drehzahl, das heißt eine Änderung der Drehzahl in Abhängigkeit von der Eindrücktiefe des Betätigungsknopfes, bewirkt.

Es ist bekannt, derartige Weggeber als Potentiometer, das heißt als veränderbare Ohmsche Widerstände beispielsweise mit Schleifkontakten auszuführen. Die Schleifkontakte werden beispielsweise mittels einer mechanischen Übersetzung mit dem Betätigungsknopf des Elektrowerkzeugs verbunden. Derartige Schleifkontakte unterliegen dabei einer Abnutzung aufgrund von Verschmutzungen, beispielsweise von abrasiven Substanzen beim Bohren, Schleifen oder Sägen, so dass die wegabhängige Steuerung beeinträchtigt wird oder vollständig ausfällt.

In der DE 2816600 A1 ist eine Vorrichtung zur Wegerfassung und zum Positionieren von Werkstücken, Werkzeugen und Maschinen angegeben, die ein kapazitives Wegaufnahmesystem aufweist. Ein Dielektrikum aus einer Kunststofffolie wird mehr oder weniger weit zwischen Platten eines ersten Kondensators geschoben und beeinflusst eine von einem Oszillatior verursachte Kapazität.

Ein weiterer kapazitive Weggeber ist in der US 5,585,733 A gezeigt. Ein aus Schichten gebildeter erster Kondensator ist immer mit einem dielektrischen Körper ausgefüllt. Ein zweiter Kondensator weist einen entlang einer Zylinderachse bewegbaren Kolben auf, sodass die Kapazität des Kondensators sich ändert.

Die GB 2 035 569 A zeigt einen kapazitive Positionsgeber, bei dem zwischen zwei Elektrodenflächen ein Körper bewegt wird, um die Kapazität zu ändern. Auch ein Referenzkondensator ist vorhanden.

Es ist nun Aufgabe der Erfindung, einen Weggeber anzugeben, der weniger anfällig für Verschmutzungen und dadurch entstehende Abnutzung ist. Weiterhin ist es Aufgabe der Erfindung eine Schaltungsanordnung mit einem derartigen Weggeber anzugeben, mit welchem eine stabile wegabhängige Steuerung einer Elektronikvorrichtung, beispielsweise einem Elektrowerkzeug, möglich ist. Schließlich soll erfindungsgemäß eine Elektronikvorrichtung mit einer derartigen Schaltungsanordnung angegeben werden.

Die Aufgabe der Erfindung wird durch einen Weggeber gemäß den Merkmalen des Patentanspruchs 1, durch eine Schaltungsanordnung gemäß den Merkmalen des Patentanspruchs 14 und durch eine Elektronikvorrichtung gemäß den Merkmalen des Patentanspruchs 17 gelöst.

Vorteilhafte Ausgestaltungsvarianten der Erfindung sind in den Unteransprüchen beschrieben.

Gemäß der Erfindung ist in dem Gehäuse des Weggebers eine Aufnahme für einen zumindest in einer Raumrichtung verschiebbar gelagerten Schieber ausgebildet.

Der erfindungsgemäße kapazitive Wegsensor zeichnet sich insbesondere auch dadurch aus, dass keine für Verschmutzungen anfälligen Schleifkontakte vorgesehen sind, sondern der Schieber relativ zu den Elektroden innerhalb der Aufnahme verschiebbar gelagert ist. Im Gegensatz zu herkömmlichen Widerstandspotentiometern liegt bei dem erfindungsgemäßen Weggeber keine Spannung zwischen einem Schleifer und einer Widerstandsfläche an.

Die Aufnahme kann einen Referenzbereich aufweisen, in welchem der Schieber unabhängig vom Verschiebeweg zwischen einer an einer ersten Seite des Schiebers angeordneten plattenförmigen Masseelektrode und einer an der der ersten Seite gegenüberliegenden zweiten Seite des Schiebers angeordneten plattenförmigen Referenzelektrode geführt ist.

Weiterhin kann die Aufnahme einen an den Referenzbereich angrenzenden Messbereich aufweisen, in welchem der Schieber zwischen einer an der ersten Seite des Schiebers angeordneten plattenförmigen Masseelektrode und einer an der zweiten Seite des Schiebers angeordneten plattenförmigen Messelektrode geführt ist. Der Schieber ragt abhängig vom Verschiebeweg zumindest in einen Teilbereich des Messbereichs hinein.

Bei dem erfindungsgemäßen Weggeber ändert sich bei dem zwischen der Messelektrode und der Masseelektrode, das heißt im Messbereich ausgebildeten Messkondensator die Kapazität wegproportional beim Hineinschieben bzw. Herausziehen des Schiebers aus der Aufnahme.

Bei Verwendung eines Referenzbereiches befindet sich der Schieber unabhängig vom Verschiebeweg dabei stets im Referenzbereich zwischen der Referenzelektrode und der Masseelektrode, das heißt im Bereich des aus der Referenzelektrode und der Masseelektrode gebildeten Referenzkondensators. Die zwischen der Referenzelektrode und der Masseelektrode ausgebildete Kapazität bleibt dabei konstant. Durch Vergleich der wegproportionalen Änderung der Kapazität im Messbereich der Aufnahme mit der wegunabhängigen, konstanten Kapazität im Referenzbereich lässt sich ein wegproportionales Signal erzeugen, welches sich mit einer geeigneten Schaltungsanordnung beispielsweise zur Regelung der Drehzahl eines Elektromotors verwenden lässt.

Sowohl die Kapazität im Messbereich als auch die Kapazität im Referenzbereich unterliegen Umwelteinflüssen, wie beispielsweise Feuchtigkeit und Temperatur, wodurch sich diese Kapazitäten ändern. Da der Messbereich in unmittelbarer Nähe zum Referenzbereich angeordnet sein kann, unterliegen bei dem Weggeber die Referenzkapazität und die wegabhängige Kapazität denselben Einflussfaktoren und ändern sich dem entsprechend in gleichem Maße.

Gemäß einer besonders einfachen Ausführungsform können die im Referenzbereich angeordnete Masseelektrode und die im Messbereich angeordnete Masseelektrode durch eine einstückig ausgebildete gemeinsame Masseelektrode gebildet sein. Hierdurch wird der Aufbau des Weggebers sowie dessen Verschaltung auf der Leiterplatte einer Schaltungsanordnung vereinfacht. Zudem kann die Masseelektrode dabei auch zur elektromagnetischen Abschirmung für den Weggeber dienen.

Die Referenzelektrode und die Messelektrode können in einer gemeinsamen Ebene nebeneinander angeordnet und durch eine Isolierung gegeneinander elektrisch isoliert sein. Dabei können die Referenzelektrode und die Messelektrode im Wesentlichen parallel zu der Masseelektrode angeordnet sein.

Zwischen der ersten Seite des Schiebers und der Masseelektrode kann eine erste Isolierungsschicht angebracht sein. Dabei ist es zum einen möglich, die erste Isolierungsschicht direkt auf der ersten Seite des Schiebers anzubringen. Zum anderen kann alternativ die erste Isolierungsschicht auch an der Masseelektrode angebracht sein.

Zwischen der zweiten Seite des Schiebers und der Referenzelektrode und/oder zwischen der zweiten Seite des Schiebers und der Messelektrode kann eine durchgängige zweite Isolierungsschicht angebracht sein. Dabei kann die zweite Isolierungsschicht direkt an der zweiten Seite des Schiebers angebracht sein. Alternativ kann die zweite Isolierungsschicht auch an der Referenzelektrode und an der Messelektrode angebracht sein, wobei sie diese beiden Elektroden überspannt.

Durch die erste Isolierungsschicht sowie durch die zweite Isolierungsschicht, welche beidseitig des Schiebers vorgesehen sein können, wird zum einen der Schieber von den jeweiligen Elektroden elektrisch isoliert. Andererseits können die Isolierungsschichten auch als eine Art Gleitlager für den in der Aufnahme verschiebbar gelagerten Schieber dienen.

Gemäß einer bevorzugten Ausführungsform der Erfindung kann die Masseelektrode direkt am Gehäuse angebracht und von diesem gehalten sein. Die Masseelektrode kann dabei mit zumindest einem in Richtung auf die Leiterplatte vorstehenden Anschlusspin oder dergleichen Anschlusselektrode zur weiteren Verschaltung verbunden sein. Dieser Anschlusspin kann neben der Kontaktierung der Massenelektrode auch als Befestigungsmöglichkeit des Weggebers an der Leiterplatte dienen.

Die Aufnahme für den Schieber am Gehäuse kann durch einen in Richtung der Leiterplatte offenen Aufnahmekanal gebildet sein, so dass die zweite Seite des Schiebers nicht abgedeckt ist und in Richtung der Leiterplatte freiliegt. An der Leiterplatte können dabei auch zwei voneinander getrennte, durch eine Isolierung gegeneinander elektrisch isolierte, zueinander benachbarte Elektrodenflächen ausgebildet sein. Dabei bildet die eine der Elektrodenflächen die Referenzelektrode und die andere der Elektrodenflächen die Messelektrode. Die zweite Seite des im einseitig offenen Aufnahmekanal geführten Schiebers streicht beim Verschieben über die Referenzelektrode und über die Messelektrode, wobei dazwischen eine Isolierungsschicht vorgesehen sein kann. Mit dieser Anordnung wird die Bauhöhe des Weggebers minimiert und insgesamt der Aufbau vereinfacht.

Der Schieber kann einen quaderförmigen Grundkörper aufweisen, der sich in den Referenzbereich und den Messbereich hinein erstreckt. Eine derartige Formgebung ist besonders einfach zu realisieren.

Der Grundkörper des Schiebers kann aus einem Metall oder metallisierter Kunststoff bestehen oder einer durchkontaktierten Leiterplatte. Dabei kann eine Erfindungsvariante dergestalt sein, dass der aus Metall bestehende Grundkörper an seiner der Maßelektrode und/oder der Messelektrode und/oder der Referenzelektrode zugewandten Seite mit einer Isolationsschicht versehen ist, vorzugsweise der Grundkörper aus Aluminium besteht, und die Isolationsschicht als eloxierte Schicht ausgebildet ist.

Gemäß einem Grundgedanken der Erfindung ist eine Schaltungsanordnung mit dem erfindungsgemäßen Weggeber vorgesehen. Bei dieser Schaltungsanordnung ist die Masseelektrode mit Massepotential verbunden. Die Referenzelektrode und die Messelektrode dagegen sind mit Anschlüssen eines Mikroprozessors verbunden. Der Mikroprozessor ist dabei derart ausgebildet, dass er aufgrund des Vergleichs der zwischen der Referenzelektrode und der Masseelektrode vorliegenden, stets konstanten Referenzkapazität und der zwischen der Masseelektrode und der Messelektrode sich aufgrund des Verschiebeweges des Schiebers im Messbereich des Weggebers einstellende wegabhängige Kapazität ein wegabhängiges, digitales Signal erzeugt.

Der Mikroprozessor führt Algorithmen aus, welche dazu führen, dass analog zum Verschiebeweg des Schiebers ein wegabhängiges Signal abgegeben wird. Diese Algorithmen können zum Beispiel das sogenannte CVD-Verfahren ("Capacitive Voltage Divider"-Verfahren) des Unternehmens Microchip Technology Inc. oder ein ähnliches Verfahren durchführen, um die Kapazitäten auszuwerten und zu vergleichen. Das in dem Mikroprozessor implantierte CVD-Verfahren (oder andersartige Algorithmen) bietet eine störsichere Messwerterfassung und Messwertauswertung. Dabei ist das CVD-Verfahren (oder dergleichen) auch sehr störunempfindlich gegen elektromagnetische Einkopplungen.

Zusätzlich kann es vorgesehen sein, dass der Mikroprozessor (50) mit einer Ausgangsschaltung (52) verbunden ist, oder derart ausgebildet ist, dass in Abhängigkeit von dem Verschiebeweg (a) des Schiebers (18) eine analoge Spannung (V_{analog}) ausgegeben wird. Die ausgegebene analoge Spannung kann einen Bereich zwischen 10 % und 90 % einer angelegten Versorgungsspannung umfassen. Die Nutzung des Versorgungsspannungsbereichs bei der ausgegebenen Analogspannung zwischen 10 % und 90 % ergibt den Vorteil, dass die Sensorsignale des Weggebers sicher in wegabhängige Signale umsetzbar sind, da in der Nähe der Versorgungsspannung Fehler durch Übergangswiderstände oder Kurzschlüsse auftreten und eine genaue wegabhängige Drehzahlsteuerung stören können.

Gemäß einem weiterführenden Gedanken der Erfindung kann die Ausgangsschaltung oder der Mikroprozessor mit einer in Abhängigkeit vom Verschiebeweg des Schiebers im Messbereich des Weggebers zu regelnden Elektronikvorrichtung, beispielsweise eines Elektrowerkzeugs verbunden sein.

Weiterhin erfindungsgemäß kann die mit der erfindungsgemäßen Schaltungsanordnung ausgestattete Elektronikvorrichtung derart ausgestaltet sein, dass der Schieber mittels einer mechanischen Übersetzung mit einem manuell betätigbaren Betätigungselement der Elektronikvorrichtung verbunden ist. Die Bewegung des Betätigungselements wird dabei auf den Schieber des Weggebers übertragen, so dass eine wegabhängige Steuerung der Elektronikvorrichtung möglich ist.

Gemäß einem Grundgedanken der Erfindung ist eine Elektronikvorrichtung mit einer erfindungsgemäßen Schaltungsanordnung vorgesehen. Der Schieber kann mittels einer mechanischen Übersetzung mit einem Betätigungselement der Elektronikvorrichtung verbunden sein, wobei die Bewegung des Betätigungselements auf den Schieber übertragbar ist.

Die Erfindung wird nachfolgend anhand eines in den Zeichnungen dargestellten Ausführungsbeispiels näher erläutert.

Es zeigen:
- Figur 1: in schematischer Darstellung und im Längsschnitt eine Ausführungsform eines an einer Leiterplatte angebrachten Weggebers;
- Figur 2: in schematischer Darstellung und in Draufsicht den in Figur 1 gezeigten Weggeber, wobei der Schieber in zwei unterschiedlichen Verschiebepositionen dargestellt ist;
- Figur 3: in schematischer Darstellung und perspektivischer Ansicht den in Figur 2 gezeigten Weggeber; und
- Figur 4: in schematischer Darstellung einen vereinfachten Schaltplan einer Schaltungsanordnung mit dem in den Figuren 1 bis 3 gezeigten Weggeber.

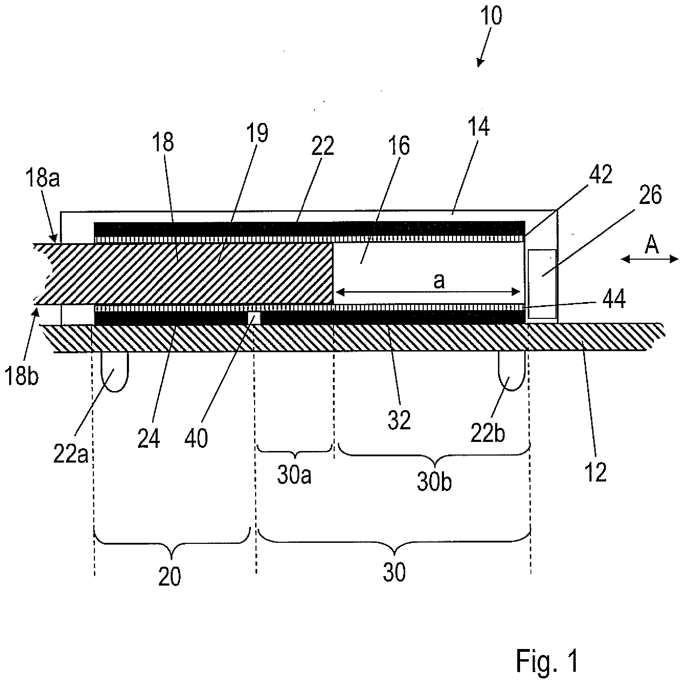

Die Figur 1 zeigt in schematischer Darstellung und im Längsschnitt eine Ausführungsform eines an einer Leiterplatte 12 angebrachten Weggebers 10.

Der kapazitive Weggeber 10 weist ein an der Leiterplatte 12 angebrachtes Gehäuse 14 aus Kunststoff auf. In dem Gehäuse 14 ist eine im Querschnitt senkrecht zur Zeichenebene flache rechteckige Aufnahme 16 ausgebildet. Die Aufnahme 16 am Gehäuse 14 ist durch einen in Richtung der Leiterplatte 12 offenen Aufnahmekanal gebildet. In der Aufnahme 16 ist ein in der durch den Doppelpfeil A gekennzeichneten Raumrichtung verschiebbar gelagerter Schieber 18 gelagert. Der Schieber 18 weist einen im Querschnitt senkrecht zur Zeichenebene flachen rechteckigen Grundkörper 19 auf, der beispielsweise aus Aluminium oder einem anderen Metall besteht. Aluminium ist dann zu bevorzugen, wenn der kapazitive Weggeber mit geringem Gewicht kostengünstig hergestellt werden soll. Denkbar ist es auch, den Grundkörper 19 aus Kupfer zu fertigen.

Die Aufnahme 16 ist durch einen Referenzbereich 20 und einen dazu benachbarten, in der Figur 1 rechts neben dem Referenzbereich 20 dargestellten Messbereich 30 definiert.

Im Referenzbereich 20 ist der Schieber 18 bzw. dessen Grundkörper 19 innerhalb der Aufnahme 16 zwischen einer an der ersten, oberen Seite 18a des Schiebers angeordneten plattenförmigen Masseelektrode 22 und einer an der der ersten Seite 18a gegenüberliegenden zweiten, unteren Seite 18b des Schiebers 18 angeordneten plattenförmigen Referenzelektrode 24 geführt. Die Referenzelektrode 24 ist durch eine an der Leiterplatte 12 ausgebildete, plattenförmige Kupferelektrode gebildet. Der Schieber 18 bzw. dessen Grundkörper 19 befindet sich dabei unabhängig von einem Verschiebeweg a des Schiebers 18 stets im Referenzbereich 20, so dass der Schieber 18 den Raumbereich zwischen der Referenzelektrode 24 und der Masseelektrode 22 stets ausfüllt, auch wenn sich der Schieber 18 um den Verschiebeweg a in beide Richtungen des Doppelpfeils A bewegt.

In dem an den Referenzbereich 20 in Figur 1 rechts angrenzenden Messbereich 30 ist der Schieber 18 zwischen der an der ersten, oberen Seite 18a des Schiebers 18 angeordneten plattenförmigen Masseelektrode 22 und einer an der zweiten, unteren Seite 18b des Schiebers 18 angeordneten plattenförmigen Messelektrode 32 geführt. Die Messelektrode 32 ist durch eine an der Leiterplatte 12 ausgebildete, plattenförmige Kupferelektrode gebildet.

Das rechte freie Ende des Schiebers 18 ragt abhängig vom Verschiebeweg a des Schiebers 18 zumindest in einen Teilbereich 30a des Messbereichs 30 hinein, falls nur eine Reglerfunktion gebildet wird, oder ist völlig aus dem Messbereich 30 ausgezogen, falls zusätzlich zu der Reglerfunktion auch eine Schalterfunktion gebildet wird. Im Teilbereich 30a füllt der Schieber 18 bzw. dessen Grundkörper 19 den Raumbereich zwischen der Messelektrode 32 und der Masseelektrode 22 aus, wohingegen im übrigen Teilbereich 30b des Messbereichs 30 der Raumbereich zwischen der Messelektrode 32 und der Masseelektrode 22 nur mit Luft ausgefüllt ist. Die Teilbereiche 30a und 30b des Messbereichs 30 ändern sich entsprechend dem Verschiebeweg a des Schiebers 18.

Wie anhand der Figur 1 deutlich wird, ist die im Referenzbereich 20 angeordnete Masseelektrode und die im Messbereich 30 angeordnete Masseelektrode durch eine einstückig ausgebildete, direkt am Gehäuse 14 angebrachte gemeinsame Masseelektrode 22 gebildet. Die gemeinsame Masseelektrode 22 ist bezüglich einer zur Zeichenebene der Figur 1 senkrechten Querebene U-förmig ausgebildet, weist also parallel zur Zeichenebene unten und oben seitliche Flächen in Richtung der Schiebebewegung gemäß des Doppelpfeils A auf. Die Masseelektrode 22 ist mit vier in Richtung auf die Leiterplatte 12 vorstehenden Anschlusspins verbunden, welche die Leiterplatte 12 durchragen. Zwei Pins sind an der hinteren Seitenfläche der Massenelektrode 22 angeschlossen und werden mit der Leiterplatte 12 verlötet. Entsprechend sind zwei weitere Pins an der vorderen seitlichen Ebene vorhanden, die ebenfalls an der Leiterplatte 12 angelötet werden. In der Darstellung der Figur 1 sind jedoch nur die zwei sichtbaren Anschlusspins 22a und 22b dargestellt.

Die Referenzelektrode 24 und die Messelektrode 32 sind in einer gemeinsamen Ebene angeordnet und durch eine dazwischen angeordnete Isolierung 40 aus Kunststoff gegeneinander elektrisch isoliert. Zwischen dem Schieber 18 und der Masseelektrode 22 ist eine erste Isolierungsschicht 42 angebracht. Die erste Isolierungsschicht 42 aus Kunststoff ist direkt an der Masselelektrode 22 angebracht, wohingegen in einer (nicht gezeigten) alternativen Ausführungsform die erste Isolierungsschicht 42 auch an der ersten, oberen Seite 18a des Schiebers 18 angebracht sein kann.

Zwischen dem Schieber 18 und der Referenzelektrode 24 und zwischen dem Schieber 18 und der Messelektrode 32 ist eine durchgängige zweite Isolierungsschicht 44 aus Kunststoff angebracht. Die zweite Isolierungsschicht 44 ist direkt an der Referenzelektrode 24 und der Messelektrode 32 angebracht und überspannt diese. In einer (nicht gezeigten) alternativen Ausführungsform kann die zweite Isolierungsschicht auch direkt auf der zweiten, unteren Seite 18b des Schiebers 18 angebracht sein.

Alternativ können die Isolierung 40, die erste Isolierungsschicht 42 und die zweite Isolierungsschicht 44 auch aus einem Keramikmaterial gebildet sein oder weiter alternativ die Isolierungsschichten 42 und 44 auch durch eine isolierende Beschichtung des Schiebers zum Beispiel durch eloxieren des Schiebers aus Aluminium gebildet werden. Es ist weiterhin denkbar, dass eine oder beide Isolierschichten 42, 44 aus Teflon bestehen oder eine Teflonbeschichtung aufweisen. Dabei werden zusätzlich zu den guten Isolationseigenschaften auch die guten Gleiteigenschaften des Teflonmaterials für die Verschiebung des Schiebers ausgenutzt.

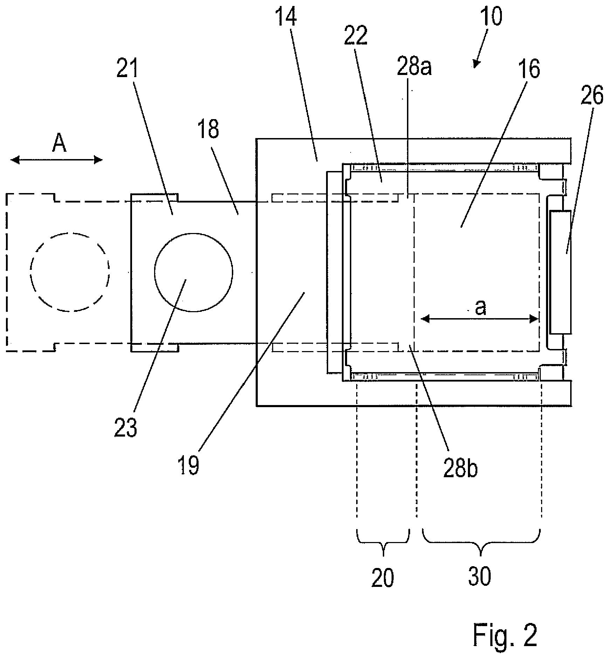

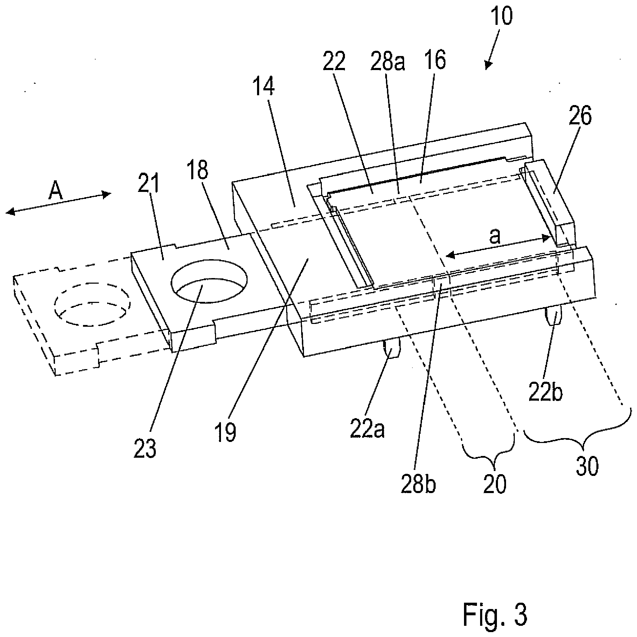

Die Figur 2 zeigt in schematischer Darstellung und in Draufsicht den in Figur 1 gezeigten Weggeber 10, wobei der Schieber 18 in zwei unterschiedlichen Verschiebepositionen dargestellt ist. Die Figur 3 zeigt dabei in schematischer Darstellung und perspektivischer Ansicht den in Figur 2 gezeigten Weggeber 10.

Wie anhand der Figuren 2 und 3 ersichtlich, schließt sich links an den Grundkörper 19 des Schiebers 18 ein an dem Gehäuse 14 hervorstehender Kopfbereich 21 an. An dem Kopfbereich 21 des Schiebers 18 ist ein Durchgangsloch 23 ausgebildet, an welchem eine nicht gezeigte Übersetzungsmechanik eines Betätigungselements einer Elektronikvorrichtung, beispielsweise eines Elektrowerkzeugs angreifen kann. Die Leiterplatte 12 kann dabei beispielsweise auch mit dem Gehäuse 14 des Weggebers 10 abschließen, so dass der Schieber 18 über den Rand der Leiterplatte 12 vorsteht und leicht betätigt werden kann.

In den Figuren 2 und 3 ist der Schieber 18 in einer Darstellung mit durchgezogenen Linien in der Ausgangsstellung gezeigt. In der Ausgangsstellung ist der Schieber 18 vollständig in den Messbereich 30 hineingeschoben, so dass der Verschiebeweg a gleich Null ist. Der Schieber 18 befindet sich in dieser Ausgangsstellung vollständig im Messbereich 30, so dass der Schieber 18 bzw. dessen Grundkörper 19 den Raumbereich zwischen der Messelektrode 32 und der Masseelektrode 22 vollständig ausfüllt. In der Ausgangsstellung schlägt das rechte freie Ende des Schiebers 18 an einem am Gehäuse 14 angeformten hinteren Anschlag 26 an.

In den Figuren 2 und 3 ist der Schieber 18 weiterhin in einer Darstellung mit gestrichelten Linien in einer relativ zur Ausgangsstellung um den Verschiebeweg a verschobenen Verschiebeposition gezeigt, in der das rechte freie Ende des Schiebers 18 gerade nicht mehr in den Messbereich 30 hineinragt. Im Messbereich 30 ist der Raumbereich zwischen der Messelektrode 32 und der Masseelektrode 22 nur mit Luft ausgefüllt.

Zwischen den in den Figuren 2 und 3 dargestellten Maximalpositionen kann das rechte freie Ende des Schiebers 18 in Abhängigkeit vom Verschiebeweg a beliebige Positionen im Messbereich 30 einnehmen und bewegt sich bei Betätigung des Schiebers 18 im Bereich der Messelektrode 32.

Wenn sich der Schieber 18a in den Darstellungen der Figuren 2 und 3 im Messbereich 30 um dem Verschiebeweg a nach links verschiebt, ändert sich dabei relativ zur Ausgangsstellung die Kapazität C_{weg} zwischen der Messelektrode 32 und der Masseelektrode 22 in Abhängigkeit vom Verschiebeweg a. Dabei ist zu beachten, dass sich auch in der in den Figuren 2 und 3 dargestellten Verschiebeposition der Schieber 18 stets zwischen der Referenzelektrode 24 und der Masselelektrode 22 befindet. Die Referenzkapazität C_{ref} zwischen der Referenzelektrode 24 und der Masselelektrode 22 bleibt stets unverändert. Um zu verhindern, dass der Schieber 18 sich zu weit nach links verschieben lässt, wobei dann das rechte freie Ende des Schiebers 18 in den Referenzbereich 20 hineinreichen würde, sind am rechten freie Ende des Schiebers 18 zwei sich parallel zu den Elektroden erstreckende Ansätze 28a und 28b angeformt, die in der maximalen Verschiebeposition, dass heißt nach dem maximalen Verschiebeweg a an korrespondierenden (in den Figuren nicht näher dargestellten) Anschlägen am Gehäuse 14 anschlagen.

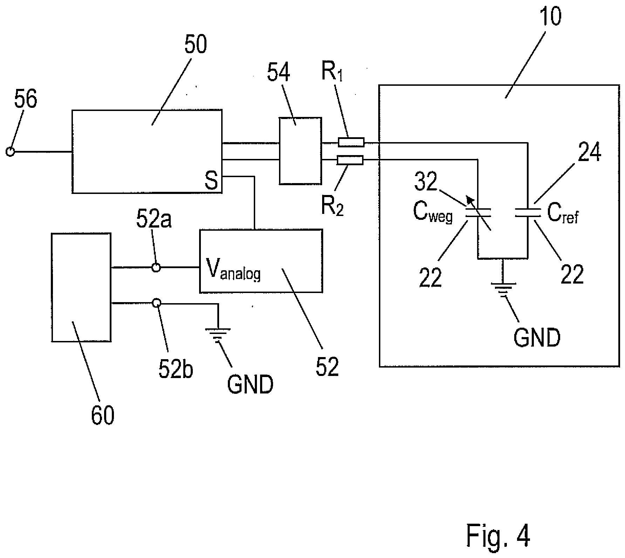

Figur 4 zeigt in schematischer Darstellung einen vereinfachten Schaltplan einer Schaltungsanordnung mit dem in den Figuren 1 bis 3 gezeigten Weggeber 10.

Die Masseelektrode 22 bildet zusammen mit der Messelektrode 24 einen Referenzkondensator der eine Kapazität C_{ref} aufweist. Die Messelektrode 32 bildet zusammen mit der Masseelektrode 22 einen Messkondensator, der eine wegabhängige Kapazität C_{weg} aufweist.

Die gemäß den Figuren 1 bis 3 als gemeinsame Masseelektrode ausgebildete Masseelektrode 22 ist mit Massepotential GND verbunden.

Die Referenzelektrode 24 und die Messelektrode 32 sind mit Anschlüssen eines Mikroprozessors 50 verbunden. Der Mikroprozessor 50 erzeugt ein wegabhängiges, digitales Signal S, das aufgrund des Vergleichs der Referenzkapazität C_{ref} mit der sich abhängig vom Verschiebeweg a des Schiebers 18 im Messbereich 30 des Weggebers 10 einstellenden wegabhängigen Kapazität C_{weg} gebildet wird.

Der Mikroprozessor 50 führt Algorithmen aus, die dazu führen, dass analog zum Verschiebeweg des Schiebers ein wegabhängiges Signal erzeugt wird. Beispielsweise kann dazu das CVD-Verfahren des Unternehmens Microchip Technology Inc. verwendet werden, wobei die wegabhängige Kapazitätsänderung eine analoge Spannungsänderung ergibt, die in ein pulsweitenmoduliertes PWM-Signal S umgesetzt wird. Dies geschieht separat für die zwischen der Referenzelektrode 24 und der Masselelektrode 22 vorliegenden Referenzkapazität C_{ref} einerseits und die zwischen der Messelektrode 32 und der Masselelektrode 22 liegenden wegabhängigen Kapazität C_{weg} andererseits. Das PWM-Signal S wird über einen Ausgang des Mikroprozessors 50 ausgegeben.

Da die beiden Kapazitäten C_{ref} und C_{weg} des Referenzkondensators bzw. des Messkondensators Umwelteinflüssen wie Feuchtigkeit und Temperatur unterliegen, ändern sich die Kapazitätswerte dementsprechend. Da bei dem Weggeber 10 der Referenzkondensator und der Messkondensator unmittelbar nebeneinander angeordnet sind, unterliegen beide Kapazitäten C_{ref} und C_{weg} denselben Einflussfaktoren und ändern sich dadurch im selben Maße.

Die genaue Referenzkapazität wird durch Vergleich mit einer fest vorgegebenen Kapazität festgestellt. Dies erfolgt beispielsweise anhand der festen, sehr stabilen Kapazität eines Analog-Digital-Wandlers beim Sample-Hold-Verfahren. Entsprechend wird auch die wegabhängige Kapazität durch Vergleich mit dieser fest vorgegebenen Kapazität bestimmt. Diese Bestimmung der Kapazitäten mittels eines fest vorgegebenen Kondensators wird in dem CVD-Verfahren oder andersartige Algorithmen im Mikroprozessor 50 vorgenommen. Dadurch wird der Verschiebeweg a durch den Vergleich der wegabhängigen Kapazität C_{weg} mit der Referenzkapazität C_{ref} genau bestimmbar.

Der Mikroprozessor 50 ist mit einer Ausgangsschaltung 52 verbunden. Die Ausgangsschaltung 52 ist mit einer in Abhängigkeit vom Verschiebeweg a des Schiebers 18 im Messbereich 30 des Weggebers 10 zu regelnden Elektronikvorrichtung 60, beispielsweise eines Elektrowerkzeugs verbunden. Die Schaltfunktion der Ausgangsschaltung 52 kann auch unmittelbar im Mikroprozessor integriert sein.

Die Ausgangsschaltung 52 gibt in Abhängigkeit von dem vom Mikroprozessor 50 erzeugten wegabhängigen PWM-Signal S eine analoge Spannung V_{analog} über Verbindungsanschlüsse 52a und 52b zur Regelung der angeschlossenen Elektronikvorrichtung 60 aus. Der Ausgangsanschluss 52b liegt dabei auf Massepotential GND. Die ausgegebene, wegabhängige analoge Spannung V_{analog} nutzt dabei einen Bereich zwischen 10 % und 90 % einer (nicht näher angegebenen) angelegten Versorgungsspannung.

Die Referenzelektrode 24 und die Messelektrode 32 sind über zwei getrennte Widerstände R₁ und R₂ und eine Reset-Schaltung 54 mit zwei Anschlüssen des Mikroprozessors 50 verbunden. Die Eingangswiderstände R₁ und R₂ schützen den Mikroprozessor 50 gegen überhöhte Ströme und Spannungen in Folge störender elektromagnetischer Einkopplungen. Am Spannungsversorgungsanschluss 56 des Mikroprozessors 50 ist ein Teil einer Versorgungsspannung angeschlossen. beispielsweise eines Elektrowerkzeugs verbunden. Die Schaltfunktion der Ausgangsschaltung 52 kann auch unmittelbar im Mikroprozessor integriert sein.

Die Ausgangsschaltung 52 gibt in Abhängigkeit von dem vom Mikroprozessor 50 erzeugten wegabhängigen PWM-Signal S eine analoge Spannung V_{analog} über Verbindungsanschlüsse 52a und 52b zur Regelung der angeschlossenen Elektronikvorrichtung 60 aus. Der Ausgangsanschluss 52b liegt dabei auf Massepotential GND. Die ausgegebene, wegabhängige analoge Spannung V_{analog} nutzt dabei einen Bereich zwischen 10 % und 90 % einer (nicht näher angegebenen) angelegten Versorgungsspannung.

Die Referenzelektrode 24 und die Messelektrode 32 sind über zwei getrennte Widerstände R₁ und R₂ und eine Reset-Schaltung 54 mit zwei Anschlüssen des Mikroprozessors 50 verbunden. Die Eingangswiderstände R₁ und R₂ schützen den Mikroprozessor 50 gegen überhöhte Ströme und Spannungen in Folge störender elektromagnetischer Einkopplungen. Am Spannungsversorgungsanschluss 56 des Mikroprozessors 50 ist ein Teil einer Versorgungsspannung angeschlossen.

## Patentansprüche

1. Kapazitiver Weggeber (10) mit einem Gehäuse (14),
wobei in dem Gehäuse (14) eine Aufnahme (16) für einen zumindest in einer Raumrichtung (A) verschiebbar gelagerten Schieber (18) ausgebildet ist, und wobei die Aufnahme (16) einen Messbereich (30) aufweist, in welchem der Schieber (18) zwischen einer an der ersten Seite (18a) des Schiebers (18) angeordneten plattenförmigen Masseelektrode (22) und einer an der zweiten Seite (18b) des Schiebers (18) angeordneten plattenförmigen Messelektrode (32) geführt ist,
**dadurch gekennzeichnet,**
**dass** der kapazitive Weggeber (10) dazu ausgelegt ist eine Reglerfunktion und eine Schalterfunktion zu bilden, wobei der Schieber (18) zur Bildung der Reglerfunktion abhängig vom Verschiebeweg (a) zumindest in einen Teilbereich (30a) des Messbereichs (30) hineinragt, und zur Bildung der Schalterfunktion völlig aus dem Messbereich (30) ausgezogen ist.

2. Kapazitiver Weggeber (10) nach Anspruch 1,
**dadurch gekennzeichnet,**
**dass** die Aufnahme (16) einen Referenzbereich (20) aufweist, in welchem der Schieber (18) unabhängig vom Verschiebeweg (a) zwischen der an einer ersten Seite (18a) des Schiebers (18) angeordneten plattenförmigen Masseelektrode (22) und einer an der der ersten Seite (18a) gegenüberliegenden zweiten Seite (18b) des Schiebers (18) angeordneten plattenförmigen Referenzelektrode (24) geführt ist.

3. Kapazitiver Weggeber (10) nach Anspruch 2,
**dadurch gekennzeichnet,**
**dass** der Messbereich (30) in Verschieberichtung an den Referenzbereich angrenzt.

4. Weggeber (10) nach Anspruch 2 oder 3,
**dadurch gekennzeichnet,**
**dass** die im Referenzbereich (20) angeordnete Masseelektrode und die im Messbereich (30) angeordnete Masseelektrode durch eine einstückig ausgebildete gemeinsame Masseelektrode (22) gebildet sind.

5. Weggeber (10) nach einem der Ansprüche 2 bis 4,
**dadurch gekennzeichnet,**
**dass** die Referenzelektrode (24) und die Messelektrode (32) in einer gemeinsamen Ebene angeordnet und durch eine Isolierung (40) gegeneinander elektrisch isoliert sind.

6. Weggeber (10) nach einem der Ansprüche 1 bis 5,
**dadurch gekennzeichnet,**
**dass** zwischen dem Schieber (18) und Masseelektrode (22) eine erste Isolierungsschicht (42) angebracht ist.

7. Weggeber (10) nach einem der Ansprüche bis 5 oder Anspruch 6 wenn abhängig von einer der Ansprüche 2 bis 5,
**dadurch gekennzeichnet,**
**dass** zwischen dem Schieber (18) und der Referenzelektrode (24) und/oder zwischen dem Schieber (18) und der Messelektrode (32) eine durchgängige zweite Isolierungsschicht (44) angebracht ist.

8. Weggeber (10) nach einem der Ansprüche 1 bis 7,
**dadurch gekennzeichnet,**
**dass** die Masseelektrode (22) direkt am Gehäuse (14) angebracht ist und mit zumindest einem in Richtung auf eine Leiterplatte (12) vorstehenden Anschlusspin (22a; 22b) oder einem sonstigen Anschlusselement verbunden ist.

9. Weggeber (10) nach Anspruch 8,
**dadurch gekennzeichnet,**
**dass** die Aufnahme (16) am Gehäuse (14) durch einen in Richtung der Leiterplatte (12) offen Aufnahmekanal gebildet ist,

10. Weggeber (10) nach einem der Ansprüche 8 oder 9,
**dadurch gekennzeichnet,**
**dass** an der Leiterplatte (12) zwei durch die Isolierung (40) gegeneinander elektrisch isolierte, benachbarte Elektrodenflächen ausgebildet sind, wobei die eine der Elektrodenflächen die Referenzelektrode (24) und die andere der Elektrodenflächen die Messelektrode (32) bilden.

11. Weggeber (10) nach einem der Ansprüche 2 bis 10,
**dadurch gekennzeichnet,**
**dass** der Schieber (18) einen quaderförmigen Grundkörper (19) aufweist, der sich in den Referenzbereich (20) und/oder den Messbereich (30) hineinerstreckt.

12. Weggeber (10) nach einem der Ansprüche 1 bis 11,
**dadurch gekennzeichnet,**
**dass** der Grundkörper (19) des Schiebers (18) aus einem Metall besteht.

13. Weggeber (10) nach Anspruch 12,
**dadurch gekennzeichnet,**
**dass** der aus Metall bestehende Grundkörper (19) an seiner der Maßelektrode (22) und/oder der Messelektrode (32) und/oder der Referenzelektrode (24) zugewandten Seite mit einer Isolationsschicht versehen ist, vorzugsweise der Grundkörper (19) aus Aluminium besteht, und die Isolationsschicht als eloxiierte Schicht ausgebildet ist.

14. Schaltungsanordnung mit einem Weggeber (10) nach einem der Ansprüche 2 bis 13, **dadurch gekennzeichnet,**
**dass** die Masseelektrode (22) mit Massepotential (GND) verbunden ist; dass die Referenzelektrode (24) und die Messelektrode (32) mit Anschlüssen eines Mikroprozessors (50) verbunden sind, wobei der Mikroprozessor (50) derart ausgebildet ist, dass er aufgrund des Vergleichs der zwischen der Referenzelektrode (24) und der Masseelektrode (22) vorliegenden Referenzkapazität (C_{ref}) und der zwischen der Masseelektrode (22) und der Messelektrode (32) sich aufgrund des Verschiebeweges (a) des Schiebers (18) im Messbereich (30) des Weggebers (10) einstellende wegabhängige Kapazität (C_{weg}) ein wegabhängiges Signal (S) erzeugt.

15. Schaltungsanordnung nach Anspruch 14,
**dadurch gekennzeichnet,**
**dass** der Mikroprozessor (50) mit einer Ausgangsschaltung (52) verbunden ist, oder derart ausgebildet ist, dass in Abhängigkeit von dem Verschiebeweg (a) des Schiebers (18) eine analoge Spannung (V_{analog}) ausgegeben wird.

16. Schaltungsanordnung nach Anspruch 15,
**dadurch gekennzeichnet,**
**dass** die Ausgangsschaltung (52) oder der Mikroprozessor (50) mit einer in Abhängigkeit vom Verschiebeweg (a) des Schiebers (18) im Messbereich (30) des Weggebers (10) zu regelnden Elektronikvorrichtung (60) verbunden ist.

17. Elektronikvorrichtung mit einer Schaltungsanordnung nach einem der Ansprüche 1 bis 16,
**dadurch gekennzeichnet,**
**dass** der Schieber (18) mittels einer mechanischen Übersetzung mit einem Betätigungselement der Elektronikvorrichtung verbunden ist, wobei die Bewegung des Betätigungselements auf den Schieber (18) übertragbar ist.

## Claims

1. A capacitive travel sensor (10) having a housing (14),
wherein a receptacle (16) is formed in the housing (14) for a slide (18) mounted such that it can be moved at least in a spatial direction (A), and wherein the receptacle (16) has a measuring region (30), in which the slide (18) is guided between a plate-shaped ground electrode (22) arranged on the first side (18a) of the slide (18) and a plate-shaped measurement electrode (32) arranged on the second side (18b) of the slide (18) **characterized in**
**that** the capacitive travel sensor (10) is designed to form a controller function and a switch function, wherein the slide (18) for the formation of the controller function projects at least into a section (30a) of the measuring region (30) on the basis of the displacement path (a) and for the formation of the switch function is extracted completely from the measuring region (30).

2. A capacitive travel sensor (10) according to Claim 1,
**characterized in**
**that** the receptacle (16) has a reference region (20), in which the slide (18) is guided on the basis of the displacement path (a) between the plate-shaped ground electrode (22) arranged on the first side (18a) of the slide (18) and a plate-shaped reference electrode (24) arranged on the second side (18b) of the slide (18) opposite the first side (18a).

3. A capacitive travel sensor (10) according to Claim 2,
**characterized in**
**that** the measuring region (30) abuts against the reference region in the direction of displacement.

4. A travel sensor (10) according to Claim 2 or 3,
**characterized in**
**that** the ground electrode arranged in the reference region (20) and the ground electrode arranged in the measuring region (30) are formed by a common ground electrode (22) formed in one piece.

5. A travel sensor (10) according to any one of Claims 2 to 4,
**characterized in**
**that** the reference electrode (24) and the measurement electrode (32) are arranged in a common plane and are electrically insulated from one another by an insulation (40).

6. A travel sensor (10) according to any one of Claims 1 to 5,
**characterized in**
**that** a first insulation layer (42) is applied between the slide (18) and the ground electrode (22).

7. A travel sensor (10) according to any one of Claims 2 to 5 or Claim 6 if dependent on any one of Claims 2 to 5,
**characterized in**
**that** a continuous second insulation layer (44) is applied between the slide (18) and the reference electrode (24) and/or between the slide (18) and the measurement electrode (32).

8. A travel sensor (10) according to any one of Claims 1 to 7,
**characterized in**
**that** the ground electrode (22) is applied directly to the housing (14) and is connected with at least one connection pin (22a; 22b) protruding in the direction towards the circuit board (12) or with another connection element.

9. A travel sensor (10) according to Claim 8,
**characterized in**
**that** the receptacle (16) is formed on the housing (14) through a receptacle channel open in the direction of the circuit board (12).

10. A travel sensor (10) according to one of Claims 8 or 9,
**characterized in**
**that** two adjacent electrode surface areas electrically insulated from one another by the insulation (40) are formed on the circuit board (12), wherein the one of the electrode surface areas forms the reference electrode (24) and the other of the electrode surface areas forms the measurement electrode (32).

11. A travel sensor (10) according to any one of Claims 2 to 10,
**characterized in**
**that** the slide (18) has a cube-shaped base body (19), which extends into the reference region (20) and/or the measuring region (30).

12. A travel sensor (10) according to any one of Claims 1 to 11,
**characterized in**
**that** the base body (19) of the slide (18) consists of a metal.

13. A travel sensor (10) according to Claim 12
**characterized in**
**that** the base body (19) consisting of metal is provided with an insulation layer on its side facing the ground electrode (22) and/or the measurement electrode (32) and/or the reference electrode (24), preferably the base body (19) consists of aluminum and the insulation layer is formed as an anodized layer.

14. A circuit arrangement with a travel sensor (10) according to any one of Claims 2 to 13,
**characterized in**
**that** the ground electrode (22) is connected with the ground potential (GND); that the reference electrode (24) and the measuring electrode (32) are connected with connections of a microprocessor (50), wherein the microprocessor (50) is designed such that it generates a travel-dependent signal (S) based on the comparison of the reference capacitance (C_{ref}) present between the reference electrode (24) and the ground electrode (22) and the travel-dependent capacitance (Cₜᵣₐᵥₑₗ) between the ground electrode (22) and the measuring electrode (32) adjusting on the basis of the displacement path (a) of the slide (18) in the measuring region (30) of the travel sensor (10).

15. A circuit arrangement according to Claim 14,
**characterized in**
**that** the microprocessor (50) is connected with an output circuit (52), or is designed in such a way that depending on the displacement path (a) of the slide (18) an analog voltage (V_{analog}) is outputted.

16. A circuit arrangement according to Claim 15,
**characterized in**
**that** the output circuit (52) or the microprocessor (50) is connected with an electronic device (60) to be controlled depending on the displacement path (a) of the slide (18) in the measurement region (30) of the travel sensor (10).

17. An electronic device with a circuit arrangement according to any one of Claims 1 to 16,
**characterized in**
**that** the slide (18) is connected by means of a mechanical transmission with an actuating element of the electronic device, wherein the movement of the actuating element can be transferred to the slide (18).

## Revendications

1. Capteur de distance capacitif (10) avec un boîtier (14),
un logement (16) pour un coulisseau (18) logé de manière coulissante dans au moins une direction spatiale (A) étant réalisé dans le boîtier (14) et le logement (16) comprenant une zone de mesure (30) dans laquelle le coulisseau (18) est guidé entre une électrode de masse (22) en forme de plaque disposée sur le premier côté (18a) du coulisseau (18) et une électrode de mesure (32) en forme de plaque disposée sur le deuxième côté (18b) du coulisseau (18),
**caractérisé en ce que**
le capteur de distance capacitif (10) est conçu pour remplir une fonction de régulation et une fonction de commutation, le coulisseau (18) dépassant au moins dans une zone partielle (30a) de la zone de mesure (30) pour remplir la fonction de régulation en fonction du trajet de déplacement (a) et étant extrait entièrement de la zone de mesure (30) pour remplir la fonction de commutation.

2. Capteur de distance capacitif (10) selon la revendication 1,
**caractérisé en ce que**
le logement (16) comprend une zone de référence (20) dans laquelle le coulisseau (18) est guidé, indépendamment du trajet de déplacement (a) entre l'électrode de masse (22) en forme de plaque disposée sur un premier côté (18a) du coulisseau (18) et une électrode de référence (24) en forme de plaque disposée sur un deuxième côté (18b), opposé au premier côté (18a) du coulisseau (18).

3. Capteur de distance capacitif (10) selon la revendication 2,
**caractérisé en ce que**
la zone de mesure (30) est adjacente, dans la direction de déplacement, à la zone de référence.

4. Capteur de distance capacitif (10) selon la revendication 2 ou 3,
**caractérisé en ce que**
l'électrode de masse disposée dans la zone de référence (20) et l'électrode de masse disposée dans la zone de mesure (30) sont constituées d'une électrode de masse (22) commune réalisée d'une seule pièce.

5. Capteur de distance capacitif (10) selon l'une des revendications 2 à 4,
**caractérisé en ce que**
l'électrode de référence (24) et l'électrode de mesure (32) sont disposées dans un même plan et sont isolées électriquement entre elles par une isolation (40).

6. Capteur de distance capacitif (10) selon l'une des revendications 1 à 5,
**caractérisé en ce que**
entre le coulisseau (18) et l'électrode de masse (22) se trouve une première couche d'isolation (42).

7. Capteur de distance (10) selon l'une des revendications 2 à 5 ou 6, si elle dépend d'une des revendications 2 à 5,
**caractérisé en ce que**
entre le coulisseau (18) et l'électrode de référence (24) et/ou entre le coulisseau (18) et l'électrode de mesure (32) se trouve une deuxième couche d'isolation continue (44).

8. Capteur de distance capacitif (10) selon l'une des revendications 1 à 7,
**caractérisé en ce que**
l'électrode de masse (22) est montée directement sur le boîtier (14) et est reliée avec une broche de connexion (22a ; 22b) dépassant au moins dans la direction d'un circuit imprimé (12) ou un autre élément de connexion.

9. Capteur de distance capacitif (10) selon la revendication 8,
**caractérisé en ce que**
le logement (16) est réalisé sur le boîtier (14) à travers un canal de logement ouvert dans la direction du circuit imprimé (12).

10. Capteur de distance capacitif (10) selon l'une des revendications 8 ou 9,
**caractérisé en ce que**
sur le circuit imprimé (12), sont réalisées deux surfaces d'électrodes adjacentes isolées l'une par rapport à l'autre par l'isolation (40), l'une des surfaces d'électrodes formant l'électrode de référence (24) et l'autre surface d'électrode formant l'électrode de mesure (32).

11. Capteur de distance capacitif (10) selon l'une des revendications 2 à 10,
**caractérisé en ce que**
le coulisseau (18) comprend un corps de base parallélépipédique (19) qui s'étend dans la zone de référence (20) et/ou la zone de mesure (30).

12. Capteur de distance capacitif (10) selon l'une des revendications 1 à 11,
**caractérisé en ce que**
le corps de base (19) du coulisseau (18) est constitué de métal.

13. Capteur de distance (10) selon la revendication 12,
**caractérisé en ce que**
le corps de base (19) constitué de métal est muni, sur son côté orienté à l'électrode de masse (22) et/ou de l'électrode de mesure (32) et/ou de l'électrode de référence (24), d'une couche d'isolation, de préférence le corps de base (19) est constitué d'aluminium et la couche d'isolation est conçu comme une couche anodisée.

14. Circuit avec un capteur de distance (10) selon l'une des revendications 2 à 13,
**caractérisé en ce que**
l'électrode de masse (22) est reliée avec un potentiel de masse (GND) ; l'électrode de référence (24) et l'électrode de mesure (32) sont reliées avec des connexions d'un microprocesseur (50), le microprocesseur (50) étant conçu de façon à générer, sur la base de la comparaison entre la capacité de référence (C_{ref}) existant entre l'électrode de référence (24) et l'électrode de masse (22) et la capacité dépendant de la distance (C_{weg}) apparaissant entre l'électrode de masse (22) et l'électrode de mesure (32) sur la base de la distance de déplacement (a) du coulisseau (18) dans la zone de mesure (30) du capteur de distance (10), un signal dépendant de la distance (S).

15. Circuit selon la revendication 14,
**caractérisé en ce que**
le microprocesseur (50) est relié avec un circuit de sortie (52) ou est conçu de façon à générer une tension analogique (V_{analog}) en fonction de la distance de déplacement (a) du coulisseau (18).

16. Circuit selon la revendication 15,
**caractérisé en ce que**
le circuit de sortie (52) ou le microprocesseur (50) est relié avec un dispositif électronique (60) qui doit être régulé en fonction de la distance de déplacement (a) du coulisseau (18) dans la zone de mesure (30) du capteur de distance (10).

17. Dispositif électrique avec un circuit selon l'une des revendications 1 à 16,
**caractérisé en ce que**
le coulisseau (18) est relié avec un élément d'actionnement du dispositif électronique au moyen d'une transmission mécanique, le déplacement de l'élément d'actionnement pouvant être transmis au coulisseau (18).
